# EUROPÄISCHE PATENTSCHRIFT

(11) **EP 3 742 703 B1**
(45) Veröffentlichungstag und Bekanntmachung des Hinweises auf die Patenterteilung: **10.07.2024**
(21) Anmeldenummer: 19176458.8
(22) Anmeldetag: 24.05.2019
(51) Int. Cl.: H04W 4/70, H04L 67/12, H04L 67/55, H04W 4/38

(54) **VERFAHREN UND KOMMUNIKATIONSSYSTEM ZUR AUTOMATISIERTEN DATENÜBERTRAGUNG ZWISCHEN FUNKGERÄTEN ÜBER EIN MOBILFUNKNETZ**
METHOD AND COMMUNICATION SYSTEM FOR AUTOMATED TRANSMISSION OF DATA BETWEEN RADIO DEVICES OVER A NETWORK
PROCÉDÉ ET SYSTÈME DE COMMUNICATION DESTINÉS À LA TRANSMISSION DE DONNÉES AUTOMATISÉE ENTRE DES APPAREILS RADIO PAR L'INTERMÉDIAIRE D'UN RÉSEAU MOBILE

(43) Veröffentlichungstag der Anmeldung: 25.11.2020
(73) Patentinhaber: Deutsche Telekom AG, 53113 Bonn (DE)
(72) Erfinder: GOUSSEN, Michael, 52393 Hürtgenwald (DE)
(74) Vertreter: Blumbach · Zinngrebe Patentanwälte PartG mbB

(56) Entgegenhaltungen:
- GB-A- 2 548 225
- US-A1- 2016 255 532
- LUZURIAGA JORGE E ET AL: "A comparative evaluation of AMQP and MQTT protocols over unstable and mobile networks", 2015 12TH ANNUAL IEEE CONSUMER COMMUNICATIONS AND NETWORKING CONFERENCE (CCNC), IEEE, 9 January 2015 (2015-01-09), pages 931 - 936, XP033176253, ISSN: 2331-9860, [retrieved on 20150714], DOI: 10.1109/CCNC.2015.7158101

## Beschreibung

Die Erfindung betrifft ein Verfahren sowie ein Kommunikationssystem zur automatisierten Datenübertragung zwischen Funkgeräten über ein Mobilfunknetz.

Einer von zahlreichen Trends auf dem Gebiet der Informations- und Kommunikationstechnologie sieht vor, Gegenstände über das Internet miteinander zu vernetzen, damit diese selbstständig über das Internet kommunizieren und so verschiedene Aufgaben für einen Besitzer erledigen können. Diese Technologie ist auch unter dem Begriff Internet der Dinge bzw. Internet of Things (IoT) bekannt. Die IoT-Technologie verlangt, dass Gerätehersteller auf jedem IoT-fähigen Gerät eine IoT-Internetschnittstelle und das TCP/IP-Protokoll implementieren müssen. Um global mit anderen IoT-fähigen Geräten über das Internet kommunizieren zu können, muss das IoT-Gerät zumindest eine TCP/IPbasierte Internet-Verbindung aufbauen. Zudem müssen sich das sendende und empfangende IoT-fähige Gerät kennen, wobei das sendende IoT-Gerät mindestens eine gerichtete Verbindung zum empfangenden IoT-Gerät aufbauen muss.

Auch die Mobilfunkanbieter sind bestrebt, die IoT-Technologie in Mobilfunknetze einzubinden. Deshalb wird derzeit mit Hochdruck am Ausbau des 5G-Netzes und der Entwicklung von NarrowBand-IoT (NBIoT) gearbeitet. Hierbei ist vorgesehen, dass IoT-fähige Geräte sich beispielsweise über die NarrowBand-Technologie mit dem Internet verbinden, wobei letztendlich immer ein sendendes IoT-fähige Gerät eine TCP/IP- basierte Datenverbindung zum empfangenden IoT-fähigen Gerät aufbauen muss. Mit anderen Worten: Auch bei der Anwendung der NarrowBand-Technologie muss in jedem IoT-fähigen Gerät eine Netzwerkschicht (IP-Schicht) und eine Transportschicht (TCP-Schicht) implementiert werden.

In GB 2 548 225 A wird ein Verfahren zum Betrieb einer Datenverbindungsvorrichtung beschrieben, wobei die Datenverbindungsvorrichtung Daten von mindestens einer Datenquelle empfängt, die empfangenen Daten in einen Nachrichtenblock komprimiert werden und, unabhängig davon, ob eine Anforderung zum Abrufen der empfangenen Daten von einem Knoten empfangen wird, der Nachrichtenblock mit den komprimierten Daten selbstständig an den Knoten weitergeleitet wird. Optional sendet ein Sender des Knotens eine Anforderung zum Abrufen von Daten an die Datenverbindungsvorrichtung, und der Empfänger der Datenverbindungsvorrichtung empfängt die Anforderung, und ein Prozessor der Datenverbindungsvorrichtung ruft die Daten aus einer Datenquelle ab und ein Sender der Datenverbindungsvorrichtung sendet einen Nachrichtenblock mit den Daten in komprimierter Form an den Knoten.

Aus US 2016/255532 A1 ist ein Verfahren zur Übertragung von zwischen Maschinen ausgetauschten Kommunikationsdaten bekannt, wobei ein Modus für eine unterbrochene Konnektivität vorgesehen ist, in dem ein Netzwerkknoten vorübergehend Kommunikationsdaten speichert, während die Netzwerkbelastung die Weiterleitung der Kommunikationsdaten nicht zulässt, und die Kommunikationsdaten dann zu einem oder mehreren Zielgeräten weiterleitet, wenn sich die Netzwerkauslastung so geändert hat, dass diese eine Weiterleitung wieder zulässt.

Der Erfindung liegt die Aufgabe zugrunde, ein Verfahren sowie ein Kommunikationssystem zur automatisierten Datenübertragung zwischen Funkgeräten über ein Mobilfunknetz zur Verfügung zu stellen, bei denen Funkgeräte in kostengünstiger und effizienter Weise über ein Mobilfunknetz miteinander vernetzt werden und selbstständig kommunizieren und so verschiedene Aufgaben für einen Besitzer erledigen können.

Ein Kerngedanke der Erfindung kann darin gesehen werden, ein Verfahren sowie ein Kommunikationssystem zur automatisierten Datenübertragung zwischen Funkgeräten über ein Mobilfunknetz zur Verfügung zu stellen, bei denen Funkgeräte in kostengünstiger und effizienter Weise über ein Mobilfunknetz miteinander vernetzt werden und selbstständig kommunizieren und so verschiedene Aufgaben für einen Besitzer erledigen können, ohne dass ein sendendes Funkgerät das Ziel-Funkgerät kennen und adressieren sowie eine gerichtete Verbindung zum Ziel-Funkgerät aufbauen muss.

Das oben genannte technische Problem wird durch die Verfahrensschritte des Anspruchs 1 und die Merkmale des Anspruchs 4 gelöst.

Vorteilhafte Weiterbildungen sind Gegenstand der abhängiger, Ansprüche.

Die Erfindungen nachfolgend anhand eines Ausführungsbeispiels in Verbindung mit den Zeichnungen näher erläutert. Es zeigen:
- Figur 1: ein beispielhaftes Kommunikationssystem zur automatisierten Datenübertragung zwischen Funkgeräten über ein Mobilfunknetz,
- Figur 2: das Blockschaltbild eines beispielhaften ersten in Figur 1 gezeigten Funkgeräts und
- Figur 3: das Blockschaltbild eines beispielhaften zweiten in Figur 1 gezeigten Funkgeräts.

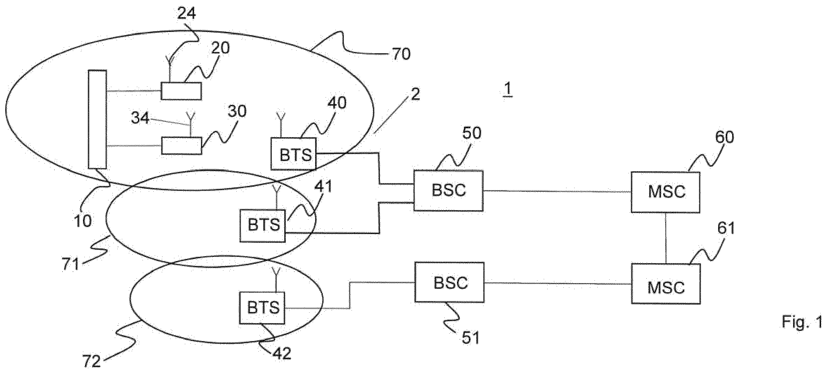

Figur 1 zeigt ausschnittsweise und stark vereinfacht ein beispielhaftes Kommunikationssystem zur automatisierten Datenübertragung zwischen Funkgeräten über ein Mobilfunknetz. Beim dargestellten Beispiel weist das Kommunikationssystem 1 wenigstens ein Mobilfunknetz 2 auf, das beispielsweise das GSM-Netz sein kann. Der Aufbau und die Funktionsweise des GSM-Netzes sind hinlänglich bekannt, so dass eine detaillierte Erläuterung des GSM-Netzes nicht erforderlich ist.

Das beispielhafte Mobilfunknetz 2 ist ausschnittsweise und schematisch dargestellt und weist beispielsweise zwei mobile Vermittlungsstellen (MSC) 60 und 61, zwei Basisstationssteuerungen (BSC) 50 und 51, zwei mit der Basisstationssteuerung 50 verbundene Basisstationen (BST) 40 und 41 sowie eine mit der Basisstationssteuerung 51 verbundene Basisstation 42 auf. Wie in Figur 1 zu sehen, leuchtet jede der Basisstationen 40-42 beispielsweise jeweils eine Funkzelle, die mit 70, 71 bzw. 72 gekennzeichnet sind, aus.

Angenommen sei, dass sich in der Funkzelle 70, die der Basisstation 40 zugeordnet ist, eine Talsperre 10 befindet, der zwei Funkgeräte 20 und 30 zugeordnet sind. Das erste Funkgerät 20 kann als Sensor ausgebildet sein, das beim dargestellten Beispiel als Wasserstandsfühler ausgebildet sein kann. Das zweite Funkgerät 30 kann als Aktor ausgebildet sein, der beim dargestellten Beispiel ein Sicherheitsventil enthalten kann. Angemerkt sei, dass beim vorliegenden Beispiel das erste Funkgerät 20 als Sender, welcher Wasserstandsdaten sendet, betrieben wird, während das zweite Funkgerät 30 als Empfänger von vom ersten Funkgerät 20 gesendeten Wasserstandsdaten, betrieben wird. Die beiden Funkgeräte 20 und 30 bilden bei dem erläuterten Beispiel stationäre Funkgeräte.

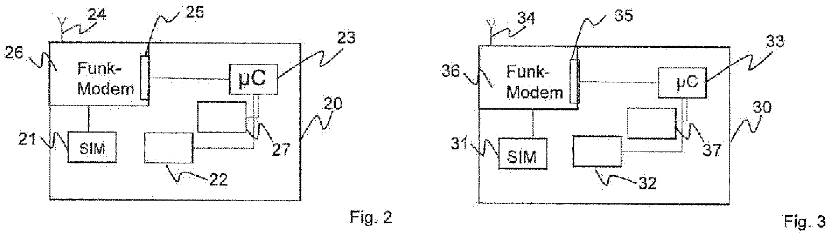

In Figur 2 ist das Funkgerät 20, welches zur Kommunikation über das Mobilfunknetz 2 ausgebildet ist, schematisch als Blockschaltbild dargestellt. Das erste Funkgerät 20 kann eine herkömmliche Funkschnittstelle 24 in Form einer Antenne zur drahtlosen Kommunikation über das Mobilfunknetz 2 aufweisen. Ferner kann das erste Funkgerät 20 ein an sich bekanntes Funk-Modem 26 aufweisen, welches als Sende-/Empfangseinrichtung fungiert und mit der Antenne 24 verbunden ist. Im Funkgerät 20 kann eine Speichereinrichtung 22 implementiert sein, in der zum Beispiel Wasserstandsdaten, die den aktuellen Wasserstand eines Stausees repräsentieren, gespeichert sein können. Die in der Speichereinrichtung 22 gespeicherten Wasserstandsdaten sind zur Übertragung über das Mobilfunknetz 2 bestimmt und werden, wie noch gezeigt wird, automatisiert vom ersten Funkgerät 20 zum zweiten Funkgerät 30 übertragen, ohne dass das erste Funkgerät 20 das zweite Funkgerät 30 kennen und eine gerichtete Verbindung zum zweiten Funkgerät 30 aufbauen muss. In der Speichereinrichtung 22 oder einer Speichereinrichtung 27 können ein erstes Anwendungsprogramm und eine Systemsoftware zur Überwachung und Steuerung des ersten Funkgeräts 20 abgespeichert sein. Weiterhin kann das erste Funkgerät 20 eine Steuereinheit 23, beispielsweise in Form eines Mikrocontrollers aufweisen, der zur Ausführung des ersten Anwendungsprogramms und der Systemsoftware ausgebildet ist.

Dem Funk-Modem 26 ist eine serielle Schnittstelle 25 zugeordnet, über die das Anwendungsprogramm mit dem Funk-Modem 26 kommunizieren kann. Über serielle Schnittstelle 25 können die über das Mobilfunknetz 2 zu übertragende Daten dem Funk-Modem 26 übergeben werden. Die serielle Schnittstelle 25 kann beispielsweise als RS232-Schnittstelle und insbesondere als AT-Befehls-basierte Schnittstelle ausgebildet sein.

Ferner kann im ersten Funkgerät 20 eine SIM-Komponente 21 implementiert sein, die mit dem Funk-Modem 26 kommunizieren kann. Die SIM-Komponente 21 kann beispielsweise als eine herkömmliche SIM-Karte oder als Software-SIM realisiert sein. Im vorliegenden Beispiel ist die SIM-Komponente 21 eine SIM-Karte, in der eine eindeutige Kennung des ersten Funkgeräts 20, insbesondere die IMSI (International Mobile Subscriber Identity) des Funkgeräts 20, und die Adresse eines vorbestimmten Netzknotens, beispielsweise des BSC 50 des Mobilfunknetzes 2 gespeichert sind. Die SIM-Karte 21 dient in herkömmlicher Weise insbesondere der Autorisierung und Authentifizierung des Funkgeräts 20 gegenüber dem Mobilfunknetz bzw. Mobilfunknetzbetreiber, zur Verschlüsselung zu sendender Daten, dem Speichern von Kurznachrichten, dem Senden und Empfangen von Nachrichten wobei die Verbindungsart vom jeweils verwendeten Mobilfunknetz, z.B. GSM-Netz, UMTS-, LTE- oder dem zukünftigen 5G-Netz abhängt.

In Figur 3 ist das zweite Funkgerät 30, welches zur Kommunikation über das Mobilfunknetz 2 ausgebildet ist, schematisch als Blockschaltbild dargestellt. Das Funkgerät 30 kann eine herkömmliche Funkschnittstelle 34 in Form einer Antenne zur drahtlosen Kommunikation über das Mobilfunknetz 2 aufweisen. Ferner kann das zweite Funkgerät 30 ein an sich bekanntes Funk-Modem 36 aufweisen, welches als Sende-/Empfangseinrichtung fungiert und mit der Antenne 34 verbunden ist. Im Funkgerät 30 kann eine Speichereinrichtung 32 implementiert sein, in der zum Beispiel vom Funkgerät 20 gesendete Wasserstandsdaten zwischengespeichert werden können. In der Speichereinrichtung 32 oder einer Speichereinrichtung 37 können ein zweites Anwendungsprogramm und eine Systemsoftware zur Überwachung und Steuerung des zweiten Funkgeräts 30 gespeichert sein. Weiterhin kann das zweite Funkgerät 30 eine Steuereinheit 33, beispielsweise in Form eines Mikrocontrollers aufweisen, der zur Ausführung des zweiten Anwendungsprogramms und der Systemsoftwareausgebildet ist.

Dem Funk-Modem 36 kann eine serielle Schnittstelle 35 zugeordnet sein, über die das zweite Anwendungsprogramm mit dem Funk-Modem 36 kommunizieren kann. Über die serielle Schnittstelle 35 können die über das Mobilfunknetz 2 empfangene Daten mittels des Funk-Modems 36 zum Beispiel in der Speichereinrichtung 32 zur weiteren Verwendung bereitgestellt werden. Die serielle Schnittstelle 35 kann beispielsweise als RS232-Schnittstelle und insbesondere als AT-Befehls-basierte Schnittstelle ausgebildet sein.

Ferner kann im zweiten Funkgerät 20 eine SIM-Komponente 31 implementiert sein, die mit dem Funk-Modem 36 kommunizieren kann. Die SIM-Komponente 31 kann beispielsweise als eine herkömmliche SIM-Karte oder als Software-SIM realisiert sein. Im vorliegenden Beispiel ist die SIM-Komponente 31 eine SIM-Karte, in der eine eindeutige Kennung des zweiten Funkgeräts 30, insbesondere die IMSI (International Mobile Subscriber Identity) des Funkgeräts 20, und gegebenenfalls die Adresse des vorbestimmten Netzknotens 50 des Mobilfunknetzes 2 gespeichert sind. Die SIM-Karte 21 dient in herkömmlicher Weise insbesondere der Autorisierung und Authentifizierung des Funkgeräts 30 gegenüber dem Mobilfunknetz bzw. Mobilfunknetzbetreiber, zur Verschlüsselung zu sendender Daten, dem Speichern von Kurznachrichten, dem Senden und Empfangen von Nachrichten, wobei die Verbindungsart vom jeweils verwendeten Mobilfunknetz, z.B. GSM-Netz, UMTS-, LTE- oder dem zukünftigen 5G-Netz abhängt.

Es versteht sich, dass das Mobilfunknetz 2 mehrere als Sender fungierende erste Funkgeräte, mehrere als Empfängen fungierende zweite Funkgeräte, mehrere Basisstationen, mehrere Basisstationsteuerungen, mehrere mobile Vermittlungsstellen und mehrere vorbestimmte Netzknoten, aufweisen kann.

In dem Mobilfunknetz 2 ist, wie bereits erwähnt, wenigstens ein vorbestimmter Netzknoten vorgesehen, in dem die eindeutige Kennung des ersten Funkgeräts 20, die eindeutige Kennung des zweiten Funkgeräts 30 und gegebenenfalls die Adresse des zweiten Funkgeräts und die Adresse des ersten Funkgeräts gespeichert sind. Bei den Adressen kann es sich jeweils um eine MSISDN (Mobile Subscriber Integrated Service Digital Number) handeln, die als eindeutige Rufnummer verwendet wird, um das Funkgerät 30 und, je nach Implementierung, das Funkgerät 20 über das Mobilfunknetz 2 zu erreichen. Im vorbestimmten Netzknoten ist ebenfalls festgelegt, dass Daten, das sind beispielsweise Wasserstandsdaten, welche vom ersten Funkgerät 20 ausgesendet und vom vorbestimmten Netzknoten empfangen werden, an das zweite Funkgerät 30 zu übertragen sind. Es versteht sich, dass in dem wenigstens einen vorbestimmten Netzknoten beliebig viele Funkgeräte als sendende und empfangende Funkgeräte verwaltet werden können, indem die eindeutigen Kennungen (IMSI) der Funkgeräte zum Beispiel in einer entsprechenden Verteilertabelle gespeichert sein können, die festlegt, welche Funkgeräte als Sender von Daten fungieren, und welche Funkgeräte als Empfänger der jeweiligen Daten fungieren. Die jeweilige Konfiguration oder Programmierung des wenigstens einen vorbestimmten Netzknoten kann zum Beispiel lokal von einer Bedienperson vorgenommen werden. Hierzu kann die Bedienperson zum Beispiel mittels eines Notebooks über eine Kommunikationsschnittstelle mit dem vorbestimmten Netzknoten kommunizieren.

Als vorbestimmter Netzknoten kann beispielsweise eine Basisstation, eine Basisstationssteuerung, eine mobile Vermittlungsstelle oder auch ein SMS-Center fungieren, in denen jeweils eine Daten-Verteilungsfunktion implementiert ist, die hinsichtlich des Netzknotens 50 näher beschrieben ist. Bei einem vorbestimmten Netzknoten handelt es sich um einen adressierbaren Netzknoten, d.h. einem vorbestimmten Netzknoten ist eine Adresse zugeordnet, über den er von Funkgeräten, beispielsweise vom Funkgerät 20 und je nach Implementierung auch vom Funkgerät 30 erreichbar ist. In dem dargestellten Beispiel ist die Basisstationssteuerung 50 als vorbestimmter Netzknoten ausgebildet. Mit anderen Worten: Die Basisstationssteuerung 50 führt neben den an sich bekannten Funktionen zur Steuerung des Mobilfunknetzes 2 noch eine Daten-Verteilungsfunktion aus. Angemerkt sei, dass auch mehrere als Verteiler fungierende vorbestimmte Netzknoten im Mobilfunknetz 2 ausgebildet sein können.

Angemerkt sei ferner, dass die Versorgungsenergie für die Funkgeräte 20 und 30 jeweils von einer integrierten Energieversorgungsquelle geliefert werden kann.

Die Funktionsweise des Kommunikationssystems 1 wird nachfolgend beispielhaft in Verbindung mit einem Push-Betrieb und einem Pull-Betrieb näher erläutert.

Angemerkt sei an dieser Stelle, dass die beiden Funkgeräte 20 und 30, bzw. die SIM-Komponente 21 und die SIM-Komponente 31 bereits beim Betreiber des Mobilfunknetzes 2 angemeldet, in an sich bekannter Weise aktiviert und im Mobilfunknetz 2 lokalisiert worden sind. Bei dem dargestellten Beispiel sind somit die eindeutigen Kennungen, also die jeweilige IMSI der beiden Funkgeräte 20 und 30 in der Heimatdatei der Mobilvermittlungsstellen 60 hinterlegt und dem Mobilfunknetz 2 ist bekannt, dass die Funkgeräte 20 und 30 von der Basisstation 40 versorgt werden, die mit der Basisstationssteuerung 50 verbunden ist. Wie zuvor bereits erläutert, sind in der Basisstationssteuerung 50, die beispielhaft als vorbestimmter Netzknoten ausgebildet ist, die eindeutigen Kennungen zumindest der Funkgeräte 20 und 30, vorzugsweise die Adressen der Funkgeräte 20 und 30 und eine Verteilungstabelle gespeichert, die festlegt, dass von dem Funkgerät 20 empfangene Daten zum Funkgerät 30 zu übertragen sind.

Angenommen sei nunmehr, dass zum Beispiel eine aktuelle Wasserpegelhöhe des Stausees von 4m ermittelt worden ist und im Funkgerät 20 die entsprechenden Wasserstandsdaten zum Übertragen über das Mobilfunknetz 2 bereitliegen. Beispielsweise werden die aktuellen Wasserstandsdaten in der Speichereinrichtung 22 zwischengespeichert. Ferner sei angenommen, dass das erste im Funkgerät 20 gespeicherte Anwendungsprogramm aktiviert worden ist und von der Steuereinheit 23 ausgeführt werden kann. Angenommen sei zudem, dass das erste Anwendungsprogramm beispielsweise zu vorgegebenen Zeitpunkten, zum Beispiel zyklisch, einen Sendebefehl, vorzugsweise einen AT-Sendebefehl erzeugen kann. Das Funkgerät 20 ist nunmehr dazu ausgebildet, unter Ansprechen auf einen vom Anwendungsprogramm erzeugten Sendebefehl die Wasserstandsdaten zusammen mit der eindeutigen Kennung des Funkgeräts 20 und der Adresse des vorbestimmten Netzknotens 50 über das Mobilfunknetz zum vorbestimmten Netzknoten 50 zu senden.

Gemäß einer vorteilhaften Implementierung verwendet das Funkgerät 20 AT-Sendebefehle, sodass der Sendebefehl zusammen mit den Wasserstandsdaten zum Beispiel in der Form "sendMsg 4" über die serielle Schnittstelle 25 dem Funk-Modem 26 übergeben wird. Das Funk-Modem 25 kann unter Mitwirkung der SIM-Karte 21 nunmehr dafür sorgen, dass unter Ansprechen auf den AT-Sendebefehl "sendMsg 4" die Wasserstandsdaten "4" zusammen mit der eindeutigen Kennung des Funkgeräts 20 und der Adresse des als vorbestimmter Netzknoten fungierenden BSC 50, die in der SIM-Karte 21 gespeichert sind, über das Mobilfunknetz zum BSC 50 übertragen werden.

Anhand der im BSC 50 hinterlegten Verteilungstabelle weiß der BSC 50, dass die empfangenen Wasserstandsdaten vom Funkgerät 20 kommen und zum Funkgerät 30 übertragen werden sollen. Da dem BSC 50 die Adresse des Funkgeräts 30 bekannt ist, wird nunmehr eine Funkverbindung in an sich bekannter Weise zum Funkgerät 30 aufgebaut und die Wasserstandsdaten werden über die Funkverbindung zum Funkgerät 30 übertragen. Es sei noch einmal betont, dass das Funkgerät 20 selbst die Adresse des Funkgeräts 30 nicht kennt und somit auch keine Kommunikationsverbindung zum Funkgerät 30 aufgebaut hat.

Das zweite Funkgerät 30 ist dazu ausgebildet, die über das Mobilfunknetz 2 empfangenen Wasserstandsdaten zu empfangen, als einen Wasserstandspegel von 4m zu interpretieren und die Wasserstandsdaten im Funkgerät 30 zur weiteren Verwendung bereitzustellen.

Gemäß einer vorteilhaften Implementierung kann das zweite, im Funkgerät 30 gespeicherte Anwendungsprogramm beispielsweise zu vorgegebenen Zeitpunkten, zum Beispiel zyklisch, einen Abrufbefehl, vorzugsweise einen AT-Abrufbefehl erzeugen. Das Funkgerät 30 bzw. die Steuereinheit 33 ist nunmehr dazu ausgebildet, einen Abrufbefehl über die serielle Schnittstelle 35 zum Funk-Modem 36 zu übertragen und die vom BSC 50 zum Funkgerät 30 übertragenen Wasserstandsdaten, die beispielsweise in der SIM-Karte 31 zwischengespeichert werden können, abzurufen. Die abgerufenen Wasserstandsdaten werden dann über die serielle Schnittstelle 35 übertragen und beispielsweise in der Speichereinrichtung 32 zur weiteren Verwendung abgelegt. Beispielsweise kann das zweite Anwendungsprogramm vorsehen, dass bei einem Wasserpegel von größer als 3, 5m das Sicherheitsventil des Funkgerät 30 öffnet, damit das von der Talsperre 10 gestaute Stauwasser ablaufen kann. Im vorliegenden Beispiel ist die Steuereinheit 33 dazu ausgebildet, unter Ausführung des zweiten Anwendungsprogramms anhand der empfangenen Wasserstandsdaten zu erkennen, dass der Referenzwasserpegel von 3,5 m überschritten worden ist. Demzufolge sorgt die Steuereinheit 33 dafür, dass das Sicherheitsventil geöffnet wird. Der zuvor beschriebene Kommunikationsablauf kann mit jedem im Funkgerät 20 erzeugten Sendebefehl und mit jedem im Funkgerät 30 erzeugten Abrufbefehl wiederholt werden. Der zuvor beschriebene Kommunikationsablauf kann als Push-Betrieb bezeichnet werden.

Nunmehr wird ein weiteres mögliches Szenario beschrieben, dass als Pull-Betrieb bezeichnet werden kann.

Zunächst sei angenommen, dass das Funkgerät 20 und insbesondere die Steuereinheit 23 unter Ausführung des ersten Anwendungsprogramms auch ereignisabhängig einen Sendebefehl erzeugen kann. Ein mögliches Ereignis ist der Empfang eines Abrufbefehls vom Funkgerät 30.

Hierzu sei angenommen, dass das zweite Funkgerät 30 und insbesondere die Steuereinheit 33 unter Ausführung des zweiten Anwendungsprogramms einen Abrufbefehl erzeugen und diesen über die serielle Schnittstelle 35 dem Funk-Modem 36 übergeben kann. Weiterhin sei angenommen, dass in der SIM-Karte 31 die Adresse des vorbestimmten Netzknotens, im vorliegenden Beispiel der BSC 50, gespeichert ist. Zudem ist im vorbestimmten Netzknoten, das ist beispielsweise der BSC 50, die Information gespeichert, dass vom Funkgerät 30 kommende Abrufbefehle zu, Funkgerät 20 zu übertragen sind. Hierzu kann in einer Verteilungstabelle unter anderem eine entsprechende Zuordnung der beiden eindeutigen Kennungen des Funkgeräts 20 bzw. des Funkgeräts 30 enthalten sein. Das Funk-Modem 36 ist beispielsweise dazu ausgebildet, den Abrufbefehl zusammen mit der Adresse des BSC 50 und der eindeutigen Kennung des Funkgeräts 30 zum BSC 50 zu übertragen, der wiederum dazu ausgebildet ist, den Abrufbefehl über das Mobilfunknetz 2 zum Funkgerät 20 zu übertragen. Hierzu kann zunächst der BSC 50 unter Ansprechen auf die im BSC 50 gespeicherte Adresse des Funkgeräts 20 veranlassen, dass eine Funkverbindung zum Funkgerät 20 aufgebaut wird, über die dann der Abrufbefehl zum Funkgerät 20 übertragen wird.

Der Abrufbefehl wird dann von dem Funk-Modem 26 über die serielle Schnittstelle 25 des ersten Funkgeräts 20 dem ersten Anwendungsprogramm übergeben. Sofern bereits aktuelle Wasserstandsdaten zum Beispiel in der Speichereinrichtung 22 zum Übertragen über das Mobilfunknetz 2 vorliegen, erzeugt beispielsweise die Steuereinheit 23 unter Ausführung des ersten Anwendungsprogramms einen AT-Sendebefehl sendMsg "Wasserstandsdaten", mit dem die Wasserstandsdaten über die serielle Schnittstelle 25 dem Funk-Modem 26 übergeben werden. In der zuvor hinsichtlich des Push-Betriebs erläuterten Weise werden nunmehr die Wasserstandsdaten zusammen mit der Adresse des BSC 50 und der eindeutigen Kennung des Funkgeräts 20 über das Mobilfunknetz 2 zum BSC 50 und die Wasserstandsdaten dann vom BSC 50 zum Funkgerät 30 übertragen. Je nach Implementierung kann das Funk-Modem 36 unmittelbar die empfangenen Wasserstandsdaten über die serielle Schnittstelle 35 dem Funkgerät 30 bzw. dem zweiten Anwendungsprogramm bereitstellen. Denkbar wäre auch eine Implementierung, gemäß der das Funk-Modem 36 die empfangenen Wasserstandsdaten in dem SIM-Karte 31 zwischenspeichert. In diesem Fall könnte die Steuereinheit 33 unter Ausführung des zweiten Anwendungsprogramms einen ersten Abrufbefehl erzeugen und über die serielle Schnittstelle 35 zum Funk-Modem 36 übertragen, wobei das Funk-Modem 36 dazu ausgebildet sein kann, unter Ansprechen auf den ersten Abrufbefehl die in der SIM-Karte 31 gespeicherten Wasserstandsdaten auszulesen und über die serielle Schnittstelle 35 dem Funkgerät 30 bzw. dem zweiten Anwendungsprogramm zur weiteren Verwendung bereitzustellen.

Angemerkt sei, dass bei dem Pull-Betrieb auch das Funkgerät 30 eine Sendefunktionalität zum Senden eines zweiten Abrufbefehls enthält. In diesem Fall kennt das Funkgerät 30 nicht die Adresse des Funkgeräts 20 und kann folglich auch keine Verbindung zum Funkgerät 20 aufbauen.

Dank des erfindungsgemäßen Verfahrens kann eine automatisierte Echtzeit-Datenübertragung zwischen den Funkgeräten 20 und 30 über das Mobilfunknetz 2 gewährleistet werden. Hierzu muss das als Sender fungierende Funkgerät 20 weder die Adresse des als Empfänger fungierenden Funkgeräts 30 kennen noch muss es eine gerichtete Verbindung zum zweiten Funkgerät 30 aufbauen, wie dies bei einer Internet-Verbindung notwendig wäre. Dies gilt, wie hinsichtlich des Pull-Betriebs erläutert auch dann, wenn das Funkgerät 30 als Abrufbefehls-Sender und das Funkgerät 20 als Abrufbefehls Empfänger betrieben wird.

Es sei noch darauf hingewiesen, dass bei Verwendung eines SMS-Centers anstelle des BSC 50 als vorbestimmter Netzknoten des Mobilfunknetzes 2 das Funkgerät 20 dazu ausgebildet ist, die über das Mobilfunknetz 2 zu übertragenden Daten als Kurznachrichten zu übertragen, wobei in den Kurznachrichten jeweils nur die zu übertragenden Daten, die Adresse des SMS-Centers und die eindeutige Kennung des Funkgeräts 20 enthalten sind. Die Adresse des Empfängers, das ist im erläuterten Beispiel die Adresse des Funkgeräts 30, wird in der Kurznachricht nicht mit übertragen, da sie dem Funkgerät 20 nicht bekannt ist. Vielmehr sorgt der SMS-Center, der in ähnlicher Weise wie der BSC 50 zu modifizieren ist, dafür, dass die in der Kurznachricht empfangenen Daten des Funkgerät 20 in einer Kurznachricht, die neben den Daten die Adresse des Funkgeräts 30 enthalten kann, zum Funkgerät 30 übertragen wird. Das Funkgerät 30 wiederum ist dazu ausgebildet, die Kurznachricht zu empfangen und die darin enthaltenen Daten des ersten Funkgeräts 20 vorzugsweise über das Funk-Modem 36 und die serielle Schnittstelle 35 dem Funkgerät 30 zur weiteren Verwendung zu übergeben.

Für den Fall, dass das Funkgerät 30 entsprechend dem oben beschriebenen Pull-Betrieb einen Abrufbefehl über das Mobilfunknetz 2 übertragen möchte, ist das Funkgerät 30 dazu ausgebildet, den Abrufbefehl in einer Kurznachricht, die die eindeutige Kennung des Funkgeräts 30 und die Adresse des SMS-Centers, aber nicht die Adresse des Funkgeräts 20 enthält, zum SMS-Center zu senden. Der SMS-Center wiederum ist dazu ausgebildet, den Abrufbefehl in einer Kurznachricht zum Funkgerät 20 zu übertragen. Diese Kurznachricht kann neben dem Abrufbefehl die Adresse des Funkgeräts 20 enthalten.

Einige beispielhafte Aspekte der Erfindung werden nachfolgend in Verbindung mit den Figuren 1 bis 3 angeführt.

Beispielhaft wird ein Verfahren zur automatisierten Datenübertragung zwischen Funkgeräten 20, 30, die über ein Mobilfunknetz 2 kommunizieren, zur Verfügung gestellt, welches folgende Verfahrensschritten aufweisen kann:
a) Bereitstellen von über das Mobilfunknetz 2 zu übertragende Daten in einem ersten Funkgerät 20, in welchem die Adresse eines vorbestimmten Netzknotens, beispielsweise des BSC 50, des Mobilfunknetzes 2 und eine eindeutige Kennung des ersten Funkgeräts 20 gespeichert sind;
b) Senden, mittels des ersten Funkgeräts 20, der in Schritt a) bereitgestellten Daten zusammen mit der Adresse des vorbestimmten Netzknotens 50 und der eindeutigen Kennung des ersten Funkgeräts 20 über das Mobilfunknetz 2 zu dem vorbestimmten Netzknoten 50 des Mobilfunknetzes 2, wobei in dem vorbestimmten Netzknoten 50 die eindeutige Kennung des ersten Funkgeräts 20, die Adresse und eine eindeutige Kennung eines zweiten Funkgeräts 30, sowie eine Information darüber, dass die vom ersten Funkgerät 20 gesendeten Daten zu dem zweiten. Funkgerät 30 zu übertragen ist, gespeichert sind;
c) Übertragen der in Schritt b) empfangenen Daten vom vorbestimmten Netzknoten 50 über das Mobilfunknetz 2 zu dem zweiten Funkgerät 30; und
d) Bereitstellen der in Schritt c) übertragenen Daten in dem zweiten Funkgerät 30 zur weiteren Verwendung.

Je nach Aufbau können auch mehr als die beiden Funkgeräte 20 und 30 in dem vorbestimmten Netzknoten 50 verwaltet werden. Denkbar ist auch, dass mehr als ein vorbestimmter Netzknoten, wie zum Beispiel der BSC 50, implementiert sind. Bei den über das Mobilfunknetz zu übertragenden Daten kann es sich beispielsweise um Sensordaten, die zum Beispiel das erste Funkgerät 20 selbst ermittelt. Alternativ könnte auch ein externer Sensor am ersten Funkgerät 20 angeschlossen sein.

Vorzugsweise wird vor Ausführung des Schrittes b) ein Sendebefehl vom ersten Funkgerät 20 erzeugt, wobei in Schritt b) unter Ansprechen auf den Sendebefehl mittels des ersten Funkgeräts 20 die in Schritt a) bereitgestellten Daten gesendet werden, und wobei Schritt d) folgende Schritte umfasst:
Erzeugen, durch das zweite Funkgerät 30, einen ersten Abrufbefehl und Bereitstellen unter Ansprechen auf den ersten Abrufbefehl der in Schritt c) übertragenen Daten in dem zweiten Funkgerät 30 zur weiteren Verwendung.

Eine zweckmäßige Ausgestaltung sieht vor, dass der Sendebefehl und die in Schritt a) bereitgestellten Daten über eine erste serielle Schnittstelle 25 einem ersten Funk-Modem 26 des ersten Funkgeräts 20 übergeben werden, dass in Schritt b) unter Ansprechen auf den Sendebefehl die in Schritt a) bereitgestellten Daten vom ersten Funk-Modem 26 gesendet werden, und dass Schritt d) folgende Schritte umfasst:
Empfangen der in Schritt c) übertragenen Daten von einem zweiten Funk-Modem 36 des zweiten Funkgeräts 30 und Bereitstellen der empfangenen Daten über eine zweite serielle Schnittstelle 35 dem zweiten Funkgerät 30 unter Ansprechen auf den ersten Abrufbefehl.

Vorteilhafterweise können die erste serielle Schnittstelle 25 und die zweite serielle Schnittstell 35 jeweils als eine AT-Befehls-basierte Schnittstelle ausgebildet sein, und der Sendebefehl und/oder der Abrufbefehl können jeweils ein AT-Befehl sein.

Zweckmäßigerweise kann vorgesehen sein, dass
der Sendebefehl vom ersten Funkgerät 20 zu vorgebbaren Zeitpunkten wiederholt oder ereignisgesteuert erzeugt wird, und dass der Abrufbefehl vom zweiten Funkgerät 30 zu vorgebbaren Zeitpunkten wiederholt oder ereignisgesteuert erzeugt wird.

Vorteilhafterweise kann vorgesehen sein, dass
der Sendebefehl vom ersten Funkgerät 20 unter Ansprechen auf einen zweiten vom zweiten Funkgerät 30 über das Mobilfunknetz 2 und den vorbestimmten Netzknoten 50 zum ersten Funkgerät 20 übertragenen Abrufbefehl erzeugt wird, wobei der zweite Abrufbefehl zu vorgebbaren Zeitpunkten oder ereignisgesteuert erzeugt wird.

Gemäß einem weiteren Aspekt der Erfindung kann ein Kommunikationssystem 1 zur automatisierten Datenübertragung zwischen Funkgeräten 20, 30 über ein Mobilfunknetz 2 geschaffen werden, umfassend
ein Mobilfunknetz 2, welches wenigstens einen vorbestimmten Netzknoten, zum Beispiel den BSC 50 aufweist,
ein erstes Funkgerät 20, in welchem die Adresse des vorbestimmten Netzknotens 50 und eine eindeutige Kennung des ersten Funkgeräts 20 gespeichert sind, wobei das erste Funkgerät 20 eine Speichereinrichtung 22 oder 27 zum Speichern von über das Mobilfunknetz 2 zu sendenden Daten aufweist und zur Kommunikation über das Mobilfunknetz 2 ausgebildet ist,
ein zweites Funkgerät 30, welches zur Kommunikation über das Mobilfunknetz 2 ausgebildet ist, wobei
in dem vorbestimmten Netzknoten 50 eine eindeutige Kennung des ersten Funkgeräts 20, eine eindeutige Kennung sowie eine Adresse des zweiten Funkgeräts 30 gespeichert sind, wobei in dem vorbestimmten Netzknoten 50 festgelegt ist, dass vom ersten Funkgerät 20 gesendete Daten zum zweiten Funkgerät 30 zu übertragen sind,
wobei das erste Funkgerät 20 ferner dazu ausgebildet ist, in der Speichereinrichtung 22 oder 27 gespeicherte, zum Senden über das Mobilfunknetz 2 bestimmte Daten zusammen mit der Adresse des vorbestimmten Netzknotens 50 und der eindeutigen Kennung des ersten Funkgeräts 20 über das Mobilfunknetz 2 zu dem vorbestimmten Netzknoten 50 des Mobilfunknetzes 2 zu senden, wobei der vorbestimmte Netzknoten 50 dazu ausgebildet ist, die vom ersten Funkgerät 20 empfangenen Daten über das Mobilfunknetz 2 zu dem zweiten Funkgerät 30 zu übertragen, und
wobei das zweite Funkgerät 30 dazu ausgebildet ist, die vom vorbestimmten Netzknoten 50 übertragenen Daten des ersten Funkgeräts 20 zu empfangen und zur weiteren Verwendung bereitzustellen.

Vorteilhafterweise kann das erste Funkgerät 20 dazu ausgebildet sein, einen Sendebefehl zu erzeugen und die in der Speichereinrichtung 22 oder 27 gespeicherten, zum Senden über das Mobilfunknetz 2 bestimmten Daten zusammen mit der Adresse des vorbestimmten Netzknotens 50 und der eindeutigen Kennung des ersten Funkgeräts 20 unter Ansprechen auf den Sendebefehl über das Mobilfunknetz 2 zu dem vorbestimmten Netzknoten 50 des Mobilfunknetzes 2 zu senden, wobei das zweite Funkgerät 30 dazu ausgebildet ist, einen ersten Abrufbefehl zu erzeugen und die vom vorbestimmten Netzknoten 50 empfangenen Daten des ersten Funkgeräts 20 unter Ansprechen auf den ersten Abrufbefehl in dem zweiten Funkgerät 30 zur weiteren Verwendung bereitzustellen.

Zweckmäßigerweise kann das erste Funkgerät 20 eine erste SIM-Komponente 21, in der die Adresse des vorbestimmten Netzknoten 50 und die eindeutige Kennung des ersten Funkgeräts 20 gespeichert ist, ein erstes Funk-Modem 26, dem eine erste serielle Schnittstelle 25 zugeordnet ist, und eine erste Steuereinheit 22 aufweist, die dazu ausgebildet ist, ein in der ersten Speichereinrichtung 22 oder einer separaten Speichereinrichtung 27 gespeichertes Anwendungsprogramm zur Steuerung des ersten Funkgeräts 20 auszuführen, wobei das zweite Funkgerät 30 eine zweite SIM-Komponente 31, in der die eindeutige Kennung des zweiten Funkgeräts 30 und, je nach Implementierung, die Adresse des vorbestimmten Netzknoten 50 gespeichert sein können, ein zweites Funk-Modem 36, dem eine zweite serielle Schnittstelle 35 zugeordnet ist, und eine zweite Steuereinheit 32 aufweisen kann, wobei die Steuereinheit 32 dazu ausgebildet sein kann, ein erstes in der zweiten Speichereinrichtung 32 oder einer separaten Speichereinrichtung 37 gespeichertes Anwendungsprogramm zur Steuerung des zweiten Funkgeräts 30 auszuführen, wobei die erste Steuereinheit 22 dazu ausgebildet sein kann, unter Ausführung des ersten Anwendungsprogramms den Sendebefehl und die in der ersten Speichereinrichtung 22 oder der separaten Speichereinrichtung 27 zum Senden über das Mobilfunknetz 2 gespeicherten Daten über die erste serielle Schnittstelle 25 zum ersten Funk-Modem 26 zu übertragen, wobei
das erste Funk-Modem 26 dazu ausgebildet sein kann, unter Ansprechen auf den Sendebefehl die zum Senden über das Mobilfunknetz 2 erhaltenen Daten zusammen mit der eindeutigen Kennung des ersten Funkgeräts 20 und der Adresse des vorbestimmten Netzknotens 50 über das Mobilfunknetz 2 zu dem vorbestimmten Netzknoten 50 zu übertragen, wobei
die zweite Steuereinheit 32 dazu ausgebildet sein kann, unter Ausführung des zweiten Anwendungsprogramms den ersten Abrufbefehl über die zweite serielle Schnittstelle 35 zum zweiten Funk-Modem 36 zu übertragen und die vom vorbestimmten Netzknoten 50 empfangenen, vom ersten Funkgerät 20 gesendeten Daten über die zweite serielle Schnittstelle 35 abzurufen und zur weiteren Verwendung im zweiten Funkgerät 30 bereitzustellen.

Je nach Implementierung kann das erste Funkgerät 20 dazu ausgebildet sein, den Sendebefehl zu vorgebbaren Zeitpunkten wiederholt oder ereignisabhängig zu erzeugen, wobei das zweite Funkgerät 30 dazu ausgebildet sein kann, den ersten Abrufbefehl zu vorgebbaren Zeitpunkten wiederholt oder ereignisabhängig, zum Beispiel unter Ansprechen auf vom zweiten Funkgerät 30 empfangene Daten, zu erzeugen.

Das Kommunikationssystem kann zum Beispiel auch ein einen Pull-Betrieb arbeiten. In diesem Fall kann die zweite Steuereinheit 33 dazu ausgebildet sein, unter Ausführung des zweiten Anwendungsprogramms einen zweiten Abrufbefehl über die serielle zweite Schnittstelle 35 zum zweiten Funk-Modem 36 zu übertragen, wobei
das zweite Funk-Modem 36 dazu ausgebildet sein kann, den zweiten Abrufbefehl zusammen mit der Adresse des vorbestimmten Netzknotens 50 und der eindeutigen Kennung des zweiten Funkgeräts 30 über das Mobilfunknetz 2 zum vorbestimmten Netzknoten 50 zu übertragen, wobei in dem vorbestimmten Netzknoten 50 auch die Adresse des ersten Funkgeräts 20 und eine Information, dass ein vom zweiten Funkgerät 30 gesendeter zweiter Abrufbefehl zum ersten Funkgerät 2 zu übertragen ist, gespeichert sein können, wobei der vorbestimmte Netzknoten 50 wiederum dazu ausgebildet sein kann, einen vom zweiten Funkgerät 30 empfangenen zweiten Abrufbefehl zum ersten Funkgerät 20 zu übertragen, wobei
das erste Funkgerät 20 dazu ausgebildet sein kann, unter Ansprechen auf den zweiten Abrufbefehl und unter Ausführung des ersten Anwendungsprogramms den Sendebefehl und die in der ersten Speichereinrichtung 22 oder der Speichereinrichtung 27 zum Senden über das Mobilfunknetz 2 gespeicherten Daten über die erste serielle Schnittstelle 25 zum ersten Funk-Modem 26 zu übertragen. Angemerkt sei, dass der erste Abrufbefehl ein AT-Abrufbefehl sein kann, und der zweite Abrufbefehl ein AT-Abrufbefehl ist.

Vorzugsweise ist das erste Funkgerät 20 als stationäres oder mobiles Funkgerät und das zweite Funkgerät 30 als stationäres oder mobiles Funkgerät ausgebildet.

Gemäß einer vorteilhaften Ausgestaltung kann das erste Funkgerät 20 als Sensor und das zweite Funkgerät 30 als Aktor ausgebildet sein. Denkbar ist auch, dass das erste Funkgerät 20 mit einem externen Sensor, wie zum Beispiel einem Temperatursensor, verbunden werden kann. In ähnlicher Weise kann das zweite Funkgerät 30) mit einem externen Aktor, wie zum Beispiel ein steuerbares Ventil, verbunden werden.

Sind beispielsweise mehrere zweite Funkgeräte vorhanden, kann der vorbestimmte Netzknoten 50 dazu ausgebildet sein, die vom ersten Funkgerät 20 empfangenen Daten zu den zweiten Funkgeräten 30 zu übertragen.

Der wenigstens eine vorbestimmte Netzknoten 50 kann beispielsweise als Basisstation (BST), Basisstationssteuerung (BSC), Mobilvermittlungsstelle (MSC) oder als SMS-Center ausgebildet ist. Das Mobilfunknetz 2 kann ein GSM-Netz, ein UMTS-Netz, ein LTG-Netz oder ein zukünftiges gemäß dem 5G-Standard implementiertes Mobilfunknetz sein.

## Patentansprüche

1. Verfahren zur automatisierten Datenübertragung zwischen Funkgeräten (20, 30), die über ein Mobilfunknetz (2) kommunizieren, mit folgenden Verfahrensschritten:
a) Bereitstellen von über das Mobilfunknetz (2) zu übertragende Daten in einem ersten Funkgerät (20), in welchem die Adresse eines vorbestimmten Netzknotens (50) des Mobilfunknetzes und eine eindeutige Kennung des ersten Funkgeräts (20) gespeichert sind;
b) Senden, mittels des ersten Funkgeräts (20), der in Schritt a) bereitgestellten Daten zusammen mit der Adresse des vorbestimmten Netzknotens (50) und der eindeutigen Kennung des ersten Funkgeräts (20) über das Mobilfunknetz (2) zu dem vorbestimmten Netzknoten (50) des Mobilfunknetzes (2), wobei in dem vorbestimmten Netzknoten (50) die eindeutige Kennung des ersten Funkgeräts (20), die Adresse und eine eindeutige Kennung eines zweiten Funkgeräts (30), sowie eine Information darüber, dass die vom ersten Funkgerät (20) gesendeten Daten zu dem zweiten Funkgerät (30) zu übertragen sind, gespeichert sind;
c) Übertragen der in Schritt b) empfangenen Daten vom vorbestimmten Netzknoten (50) über das Mobilfunknetz (50) zu dem zweiten Funkgerät (30); und
d) Bereitstellen der in Schritt c) übertragenen Daten in dem zweiten Funkgerät (30) zur weiteren Verwendung, wobei
vor Ausführung des Schrittes b) ein Sendebefehl vom ersten Funkgerät (20) erzeugt wird und in Schritt b) unter Ansprechen auf den Sendebefehl mittels des ersten Funkgeräts (20) die in Schritt a) bereitgestellten Daten gesendet werden, und wobei Schritt d) folgende Schritte umfasst:
Erzeugen, durch das zweite Funkgerät (30), eines ersten Abrufbefehls und unter Ansprechen auf den ersten Abrufbefehl Bereitstellen der in Schritt c) übertragenen Daten in dem zweiten Funkgerät (30) zur weiteren Verwendung, und wobei
der Sendebefehl vom ersten Funkgerät (20) zu vorgebbaren Zeitpunkten wiederholt oder
ereignisgesteuert erzeugt wird, und der Abrufbefehl vom zweiten Funkgerät (30) zu vorgebbaren Zeitpunkten wiederholt oder ereignisabhängig gesteuert erzeugt wird, und wobei
der Sendebefehl vom ersten Funkgerät (20) unter Ansprechen auf einen zweiten vom zweiten Funkgerät (30) über das Mobilfunknetz (2) und den vorbestimmten Netzknoten (50) zum ersten Funkgerät (20) übertragenen Abrufbefehl erzeugt wird, wobei der zweite Abrufbefehl zu vorgebbaren Zeitpunkten oder
ereignisgesteuert erzeugt wird, und wobei der zweite Abrufbefehl ein AT-Abrufbefehl ist.

2. Verfahren nach Anspruch 1,
**dadurch gekennzeichnet, dass**
der Sendebefehl und die in Schritt a) bereitgestellten Daten über eine erste serielle Schnittstelle (25) einem ersten Funk-Modem (26) des ersten Funkgeräts (20) übergeben werden, dass in Schritt b) unter Ansprechen auf den Sendebefehl die in Schritt a) bereitgestellten Daten vom ersten Funk-Modem (26) gesendet werden, und dass Schritt d) folgende Schritte umfasst:
Empfangen der in Schritt c) übertragenen Daten von einem zweiten Funk-Modem (36) des zweiten Funkgeräts (30) und
Bereitstellen der empfangenen Daten über eine zweite serielle Schnittstelle (35) dem zweiten Funkgerät (30) unter Ansprechen auf den ersten Abrufbefehl.

3. Verfahren nach Anspruch 2,
**dadurch gekennzeichnet, dass**
die erste serielle Schnittstelle (25) und die zweite serielle Schnittstelle (35) jeweils als eine AT-Befehls-basierte Schnittstelle ausgebildet sind, und dass
der Sendebefehl und/oder der Abrufbefehl jeweils ein AT-Befehl sind.

4. Kommunikationssystem (1) zur automatisierten Datenübertragung zwischen Funkgeräten (20, 30) über ein Mobilfunknetz (2), umfassend
ein Mobilfunknetz (2), welches einen vorbestimmten Netzknoten (50) aufweist,
ein erstes Funkgerät (20), in welchem die Adresse des vorbestimmten Netzknotens (50) und eine eindeutige Kennung des ersten Funkgeräts (20) gespeichert sind, wobei das erste Funkgerät (20) eine Speichereinrichtung (22, 27) zum Speichern von über das Mobilfunknetz (2) zu sendenden Daten aufweist und zur Kommunikation über das Mobilfunknetz (2) ausgebildet ist,
ein zweites Funkgerät (30), welches zur Kommunikation über das Mobilfunknetz (2) ausgebildet ist, wobei in dem vorbestimmten Netzknoten (50) eine eindeutige Kennung des ersten Funkgeräts (20), eine eindeutige Kennung sowie eine Adresse des zweiten Funkgeräts (30) gespeichert sind, wobei in dem vorbestimmten Netzknoten (50) festgelegt ist, dass vom ersten Funkgerät (20) gesendete Daten zum zweiten Funkgerät (30) zu übertragen sind,
wobei das erste Funkgerät (20) ferner dazu ausgebildet ist, in der Speichereinrichtung (22, 27) gespeicherte, zum Senden über das Mobilfunknetz (2) bestimmte Daten zusammen mit der Adresse des vorbestimmten Netzknotens (50) und der eindeutigen Kennung des ersten Funkgeräts (20) über das Mobilfunknetz (2) zu dem vorbestimmten Netzknoten (50) des Mobilfunknetzes (2) zu senden, wobei der vorbestimmte Netzknoten (50) dazu ausgebildet ist, die vom ersten Funkgerät (20) empfangenen Daten über das Mobilfunknetz (2) zu dem zweiten Funkgerät (30) zu übertragen, und
wobei das zweite Funkgerät (30) dazu ausgebildet ist, die vom vorbestimmten Netzknoten (50) übertragenen Daten des ersten Funkgeräts (20) zu empfangen und zur weiteren Verwendung bereitzustellen, und wobei das erste Funkgerät (20) dazu ausgebildet ist, einen Sendebefehl zu erzeugen und die in der Speichereinrichtung (22, 27) gespeicherten, zum Senden über das Mobilfunknetz (2) bestimmten Daten zusammen mit der Adresse des vorbestimmten Netzknotens (50) und der eindeutigen Kennung des ersten Funkgeräts (20) unter Ansprechen auf den Sendebefehl über das Mobilfunknetz (2) zu dem vorbestimmten Netzknoten (50) des Mobilfunknetzes (2) zu senden, und
das zweite Funkgerät (30) dazu ausgebildet ist, einen ersten Abrufbefehl zu erzeugen und die vom vorbestimmten Netzknoten (50) empfangenen Daten des ersten Funkgeräts (20) unter Ansprechen auf den ersten Abrufbefehl in dem zweiten Funkgerät (30) zur weiteren Verwendung bereitzustellen, und wobei das erste Funkgerät (20) eine erste SIM-Komponente (21), in der die Adresse des vorbestimmten Netzknoten (50) und die eindeutige Kennung des ersten Funkgeräts (20) gespeichert ist, ein erstes Funk-Modem (26), dem eine erste serielle Schnittstelle (25) zugeordnet ist, und eine erste Steuereinheit (22) aufweist, die dazu ausgebildet ist, ein in der ersten Speichereinrichtung (22) oder einer separaten Speichereinrichtung (27) gespeichertes Anwendungsprogramm zur Steuerung des ersten Funkgeräts (20) auszuführen, und wobei das zweite Funkgerät (30) eine zweite SIM-Komponente (31), in der die eindeutige Kennung des zweiten Funkgeräts (30) gespeichert ist, ein zweites Funk-Modem (36), dem eine zweite serielle Schnittstelle (35) zugeordnet ist, und eine zweite Steuereinheit (32) aufweist, die dazu ausgebildet ist, ein erstes in der zweiten Speichereinrichtung (32) oder einer separaten Speichereinrichtung (37) gespeichertes Anwendungsprogramm zur Steuerung des zweiten Funkgeräts (30) auszuführen, wobei
die erste Steuereinheit (22) dazu ausgebildet ist, unter Ausführung des ersten Anwendungsprogramms den Sendebefehl und die in der ersten Speichereinrichtung (23) zum Senden über das Mobilfunknetz (2) gespeicherten Daten über die erste serielle Schnittstelle (25) zum ersten Funk-Modem (26) zu übertragen, wobei
das erste Funk-Modem (26) dazu ausgebildet ist, unter Ansprechen auf den Sendebefehl die zum Senden über das Mobilfunknetz (2) erhaltenen Daten zusammen mit der eindeutigen Kennung des ersten Funkgeräts (20) und der Adresse des vorbestimmten Netzknotens (50) über das Mobilfunknetz (2) zu dem vorbestimmten Netzknoten (50) zu übertragen, wobei die zweite Steuereinheit (32) dazu ausgebildet ist, unter Ausführung des zweiten Anwendungsprogramms den ersten Abrufbefehl über die zweite serielle Schnittstelle (35) zum zweiten Funk-Modem (36) zu übertragen und die vom vorbestimmten Netzknoten (50) empfangenen, vom ersten Funkgerät (20) gesendeten Daten über die zweite serielle Schnittstelle (35) abzurufen und zur weiteren Verwendung im zweiten Funkgerät (30) bereitzustellen, und wobei die zweite Steuereinheit (33) dazu ausgebildet ist, unter Ausführung des zweiten Anwendungsprogramms einen zweiten Abrufbefehl über die serielle zweite Schnittstelle (35) zum zweiten Funk-Modem (36) zu übertragen, wobei in der zweiten SIM-Komponente (31) die Adresse des vorbestimmten Netzknotens (50) gespeichert ist, wobei
das zweite Funk-Modem (36) dazu ausgebildet ist, den zweiten Abrufbefehl zusammen mit der Adresse des vorbestimmten Netzknotens (50) und der eindeutigen Kennung des zweiten Funkgeräts (30) über das Mobilfunknetz (2) zum vorbestimmten Netzknoten (50) zu übertragen, wobei in dem vorbestimmten Netzknoten (50) die Adresse des ersten Funkgeräts (20) und eine Information, dass ein vom zweiten Funkgerät (30) gesendeter zweiter Abrufbefehl zum ersten Funkgerät (2) zu übertragen ist, gespeichert sind, wobei der vorbestimmte Netzknoten (50) dazu ausgebildet ist, einen vom zweiten Funkgerät (30) empfangenen zweiten Abrufbefehl zum ersten Funkgerät (20) zu übertragen, wobei
das erste Funkgerät (20) dazu ausgebildet ist, unter Ansprechen auf den zweiten Abrufbefehl und unter Ausführung des ersten Anwendungsprogramms den Sendebefehl und die in der ersten Speichereinrichtung (22, 27) zum Senden über das Mobilfunknetz (2) gespeicherten Daten über die erste serielle Schnittstelle (25) zum ersten Funk-Modem (26) und dann zum vorbestimmten Netzknoten (50) zu übertragen, und wobei der zweite Abrufbefehl ein AT-Abrufbefehl ist.

5. Kommunikationssystem nach Anspruch 4,
**dadurch gekennzeichnet, dass**
das erste Funkgerät (20) dazu ausgebildet ist, den Sendebefehl zu vorgebbaren Zeitpunkten wiederholt oder ereignisabhängig zu erzeugen, und dass das zweite Funkgerät (30) dazu ausgebildet ist, den ersten Abrufbefehl zu vorgebbaren Zeitpunkten wiederholt oder ereignisabhängig zu erzeugen.

6. Kommunikationssystem nach einem der Ansprüche 4 oder 5,
**dadurch gekennzeichnet, dass**
das erste Funkgerät (20) als stationäres oder mobiles Funkgerät und das zweite Funkgerät (30) als stationäres oder mobiles Funkgerät ausgebildet ist.

7. Kommunikationssystem nach Anspruch 6,
**dadurch gekennzeichnet, dass**
das erste Funkgerät (20) als Sensor und das zweite Funkgerät (30) als Aktor ausgebildet ist.

8. Kommunikationssystem nach einem der Ansprüche 4 bis 7, **gekennzeichnet durch**
mehrere zweite Funkgeräte, wobei
der vorbestimmte Netzknoten (50) dazu ausgebildet ist, die vom ersten Funkgerät (20) empfangenen Daten zu den zweiten Funkgeräten (30) zu übertragen.

9. Kommunikationssystem nach einem der Ansprüche 4 bis 8,
**dadurch gekennzeichnet, dass**
der vorbestimmte Netzknoten (50) als Basisstation (BST), Basisstationssteuerung (BSC), Mobilvermittlungsstelle (MSC) oder als SMS-Center ausgebildet ist.

## Claims

1. Method for automated data transmission between radio devices (20, 30) which communicate via a mobile radio network (2), having the following method steps:
a) providing data to be transmitted via the mobile radio network (2) in a first radio device (20), in which the address of a predetermined network node (50) of the mobile radio network and a unique identifier of the first radio device (20) are stored;
b) transmitting, by means of the first radio device (20), the data provided in step a) together with the address of the predetermined network node (50) and the unique identifier of the first radio device (20) via the mobile radio network (2) to the predetermined network node (50) of the mobile radio network (2), wherein the unique identifier of the first radio device (20), the address and a unique identifier of a second radio device (30), as well as an information that the data transmitted by the first radio device (20) is to be transmitted to the second radio device (30), are stored in the predetermined network node (50) ;
c) transmitting the data received in step b) from the predetermined network node (50) via the mobile radio network (50) to the second radio device (30); and
d) making the data transmitted in step c) available in the second radio device (30) for further use, wherein
a transmission command is generated by the first radio device (20) before step b) is carried out and in step b) the data provided in step a) is transmitted by means of the first radio device (20) in response to the transmission command, and wherein step d) comprises the following steps:
generating, by the second radio device (30), a first retrieval command and, in response to the first retrieval command, making available the data transmitted in step c) in the second radio device (30) for further use, and wherein
the transmission command is generated repeatedly at predeterminable times or in an event-controlled manner by the first radio device (20), and the retrieval command is generated repeatedly at predeterminable times or in an event-controlled manner by the second radio device (30), and wherein
the transmission command is generated by the first radio device (20) in response to a second retrieval command transmitted by the second radio device (30) via the mobile radio network (2) and the predetermined network node (50) to the first radio device (20), the second retrieval command being generated at predeterminable times or in an event-controlled manner, and the second retrieval command being an AT retrieval command.

2. The method of claim 1, **characterized in that**
the transmission command and the data provided in step a) are transferred via a first serial interface (25) to a first radio modem (26) of the first radio device (20), **in that** in step b), in response to the transmission command, the data provided in step a) are transmitted by the first radio modem (26), and **in that** step d) comprises the following steps:
receiving the data transmitted in step c) by a second radio modem (36) of the second radio device (30) and providing the received data via a second serial interface (35) to the second radio device (30) in response to the first retrieval command.

3. The method of claim 2, **characterized in that**
the first serial interface (25) and the second serial interface (35) are each designed as an AT command-based interface, and **in that** the transmission command and/or the retrieval command are each an AT command.

4. Communication system (1) for automated data transmission between radio devices (20, 30) via a mobile radio network (2), comprising a mobile radio network (2) comprising a predetermined network node (50),
a first radio device (20), in which the address of the predetermined network node (50) and a unique identifier of the first radio device (20) are stored, wherein the first radio device (20) has a memory device (22, 27) for storing data to be transmitted via the mobile radio network (2) and is designed for communication via the mobile radio network (2), a second radio device (30), which is designed for communication via the mobile radio network (2), wherein
a unique identifier of the first radio device (20), a unique identifier and an address of the second radio device (30) are stored in the predetermined network node (50), wherein it is specified in the predetermined network node (50) that data transmitted by the first radio device (20) are to be transmitted to the second radio device (30),
wherein the first radio device (20) is further adapted to transmit data stored in the memory device (22, 27) and intended for transmission via the mobile radio network (2) together with the address of the predetermined network node (50) and the unique identifier of the first radio device (20) via the mobile radio network (2) to the predetermined network node (50) of the mobile radio network (2), wherein the predetermined network node (50) is adapted to transmit the data received from the first radio device (20) to the second radio device (30) via the mobile radio network (2), and
wherein the second radio device (30) is adapted to receive the data of the first radio device (20) transmitted by the predetermined network node (50) and to make it available for further use, and wherein the first radio device (20) is adapted to generate a transmission command and to transmit the data stored in the memory device (22, 27) and intended for transmission via the mobile radio network (2), together with the address of the predetermined network node (50) and the unique identifier of the first radio device (20), to the predetermined network node (50) of the mobile radio network (2) via the mobile radio network (2) in response to the transmission command, and
the second radio device (30) is adapted to generate a first retrieval command and to make the data of the first radio device (20) received from the predetermined network node (50) available for further use in the second radio device (30) in response to the first retrieval command, and wherein
the first radio device (20) has a first SIM component (21) in which the address of the predetermined network node (50) and the unique identifier of the first radio device (20) are stored, a first radio modem (26) to which a first serial interface (25) is assigned, and a first control unit (22) which is adapted to execute an application program stored in the first memory device (22) or a separate memory device (27) for controlling the first radio device (20), and wherein
the second radio device (30) has a second SIM component (31) in which the unique identifier of the second radio device (30) is stored, a second radio modem (36) to which a second serial interface (35) is assigned, and a second control unit (32) which is adapted to execute a first application program stored in the second memory device (32) or a separate memory device (37) for controlling the second radio device (30), wherein
the first control unit (22) is adapted to transmit the transmission command and the data stored in the first memory device (23) for transmission via the mobile radio network (2) to the first radio modem (26) via the first serial interface (25) under execution of the first application program, wherein the first radio modem (26) is adapted to transmit the data received for transmission via the mobile radio network (2) together with the unique identifier of the first radio device (20) and the address of the predetermined network node (50) to the predetermined network node (50) via the mobile radio network (2) in response to the transmission command, wherein
the second control unit (32) is adapted to transmit the first retrieval command to the second radio modem (36) via the second serial interface (35) under execution of the second application program and to retrieve the data received from the predetermined network node (50) and transmitted by the first radio device (20) via the second serial interface (35) and to make it available for further use in the second radio device (30), and wherein
the second control unit (33) is adapted to transmit a second retrieval command to the second radio modem (36) via the second serial interface (35) under execution of the second application program, the address of the predetermined network node (50) being stored in the second SIM component (31), wherein
the second radio modem (36) is adapted to transmit the second retrieval command together with the address of the predetermined network node (50) and the unique identifier of the second radio device (30) via the mobile radio network (2) to the predetermined network node (50), the address of the first radio device (20) and information that a second retrieval command sent by the second radio device (30) is to be transmitted to the first radio device (2) being stored in the predetermined network node (50), wherein
the predetermined network node (50) is adapted to transmit a second retrieval command received from the second radio device (30) to the first radio device (20), wherein
the first radio device (20) is adapted to transmit the transmission command and the data stored in the first memory device (22, 27) for transmission via the mobile radio network (2) via the first serial interface (25) to the first radio modem (26) and then to the predetermined network node (50) in response to the second retrieval command and under execution of the first application program, and wherein the second retrieval command is an AT retrieval command.

5. The communication system of claim 4,
**characterized in that**
the first radio device (20) is adapted to generate the transmission command repeatedly at predeterminable times or event-dependently, and **in that**
the second radio device (30) is designed to generate the first retrieval command repeatedly at predeterminable times or event-dependently.

6. The communication system of any one of claims 4 or 5, **characterized in that**
the first radio device (20) is designed as a stationary or mobile radio device and the second radio device (30) is designed as a stationary or mobile radio device.

7. The communication system of claim 6,
**characterized in that**
the first radio device (20) is designed as a sensor and the second radio device (30) is designed as an actuator.

8. The communication system of any one of claims 4 to 7, **characterized by**
a plurality of second radio devices, wherein
the predetermined network node (50) is adapted to transmit the data received from the first radio device (20) to the second radio devices (30).

9. The communication system of any one of claims 4 to 8, **characterized in that**
the predetermined network node (50) is designed as a base station (BST), a base station control (BSC), a mobile switching center (MSC) or an SMS center.

## Revendications

1. Procédé pour la transmission de données automatisée entre des appareils radio (20, 30), qui communiquent par l'intermédiaire d'un réseau de radiotéléphonie mobile (2), avec les étapes de procédé suivantes :
a) la fourniture de données à transmettre par l'intermédiaire du réseau de radiotéléphonie mobile (2) dans un premier appareil radio (20) dans lequel l'adresse d'un noeud de réseau (50) prédéfini du réseau de radiotéléphonie mobile et un identifiant unique du premier appareil radio (20) sont stockés ;
b) l'envoi, au moyen du premier appareil radio (20), des données fournies dans l'étape a) conjointement avec l'adresse du noeud de réseau (50) prédéfini et l'identifiant unique du premier appareil radio (20) par l'intermédiaire du réseau de radiotéléphonie mobile (2) au noeud de réseau (50) prédéfini du réseau de radiotéléphonie mobile (2), dans lequel l'identifiant unique du premier appareil radio (20), l'adresse et un identifiant unique d'un deuxième appareil radio (30), ainsi qu'une information sur le fait que les données envoyées par le premier appareil radio (20) sont à transmettre au deuxième appareil radio (30), sont stockées dans le noeud de réseau (50) prédéfini ;
c) la transmission des données reçues dans l'étape b) à partir du noeud de réseau (50) prédéfini par l'intermédiaire du réseau de radiotéléphonie mobile (50) au deuxième appareil radio (30) ; et
d) la fourniture des données transmises dans l'étape c) dans le deuxième appareil radio (30) pour une utilisation ultérieure, dans lequel
avant l'exécution de l'étape b) une instruction d'envoi est produite par le premier appareil radio (20) et dans l'étape b) en réponse à l'instruction d'envoi les données fournies dans l'étape a) sont envoyées au moyen du premier appareil radio (20), et dans lequel l'étape d) comprend les étapes suivantes :
la production, par le deuxième appareil radio (30), d'une première instruction d'interrogation et en réponse à la première instruction d'interrogation la fourniture des données transmises dans l'étape c) dans le deuxième appareil radio (30) pour une utilisation ultérieure, et dans lequel
l'instruction d'envoi est produite par le premier appareil radio (20) à des moments pouvant être prédéfinis à plusieurs reprises ou de manière commandée par l'événement, et l'instruction d'interrogation est produite par le deuxième appareil radio (30) à des moments pouvant être prédéfinis à plusieurs reprises ou de manière commandée en fonction de l'événement, et dans lequel
l'instruction d'envoi est produite par le premier appareil radio (20) en réponse à une deuxième instruction d'interrogation transmise par le deuxième appareil radio (30) par l'intermédiaire du réseau de radiotéléphonie mobile (2) et du noeud de réseau (50) prédéfini au premier appareil radio (20), dans lequel la deuxième instruction d'interrogation est produite à des moments pouvant être prédéfinis ou de manière commandée par l'événement, et dans lequel la deuxième instruction d'interrogation est une instruction d'interrogation AT.

2. Procédé selon la revendication 1,
**caractérisé en ce que**
l'instruction d'envoi et les données fournies dans l'étape a) sont transférées par l'intermédiaire d'une première interface série (25) à un premier modem radio (26) du premier appareil radio (20), que dans l'étape b) en réponse à l'instruction d'envoi les données fournies dans l'étape a) sont envoyées par le premier modem radio (26), et que l'étape d) comprend les étapes suivantes :
la réception des données transmises dans l'étape c) par un deuxième modem radio (36) du deuxième appareil radio (30) et
la fourniture des données reçues par l'intermédiaire d'une deuxième interface série (35) au deuxième appareil radio (30) en réponse à la première instruction d'interrogation.

3. Procédé selon la revendication 2,
**caractérisé en ce que**
la première interface série (25) et la deuxième interface série (35) sont réalisées respectivement en tant qu'interface basée sur une instruction AT, et que
l'instruction d'envoi et/ou l'instruction d'interrogation sont respectivement une instruction AT.

4. Système de communication (1) pour la transmission de données automatisée entre des appareils radio (20, 30) par l'intermédiaire d'un réseau de radiotéléphonie mobile (2), comprenant
un réseau de radiotéléphonie mobile (2), lequel présente un noeud de réseau (50) prédéfini,
un premier appareil radio (20), dans lequel l'adresse du noeud de réseau (50) prédéfini et un identifiant unique du premier appareil radio (20) sont stockés, dans lequel le premier appareil radio (20) présente un dispositif de stockage (22, 27) pour le stockage de données à envoyer par l'intermédiaire du réseau de radiotéléphonie mobile (2) et est réalisé pour la communication par l'intermédiaire du réseau de radiotéléphonie mobile (2),
un deuxième appareil radio (30), lequel est réalisé pour la communication par l'intermédiaire du réseau de radiotéléphonie mobile (2), dans lequel dans le noeud de réseau (50) prédéfini un identifiant unique du premier appareil radio (20), un identifiant unique ainsi qu'une adresse du deuxième appareil radio (30) sont mis en mémoire, dans lequel il est déterminé dans le noeud de réseau (50) prédéfini que les données envoyées par le premier appareil radio (20) sont à transmettre au deuxième appareil radio (30),
dans lequel le premier appareil radio (20) est en outre réalisé pour envoyer des données stockées dans le dispositif de stockage (22, 27), destinées à être envoyées par l'intermédiaire du réseau de radiotéléphonie mobile (2) conjointement avec l'adresse du noeud de réseau (50) prédéfini et l'identifiant unique du premier appareil radio (20) par l'intermédiaire du réseau de radiotéléphonie mobile (2) au noeud de réseau (50) prédéfini du réseau de radiotéléphonie mobile (2), dans lequel le noeud de réseau (50) prédéfini est réalisé pour transmettre les données reçues par le premier appareil radio (20) par l'intermédiaire du réseau de radiotéléphonie mobile (2) au deuxième appareil radio (30), et
dans lequel le deuxième appareil radio (30) est réalisé pour recevoir les données du premier appareil radio (20) transmises par le noeud de réseau (50) prédéfini et pour les fournir pour une utilisation ultérieure, et dans lequel
le premier appareil radio (20) est réalisé pour produire une instruction d'envoi et pour envoyer les données stockées dans le dispositif de stockage (22, 27), destinées à être envoyées par l'intermédiaire du réseau de radiotéléphonie mobile (2) conjointement avec l'adresse du noeud de réseau (50) prédéfini et l'identifiant unique du premier appareil radio (20) en réponse à l'instruction d'envoi par l'intermédiaire du réseau de radiotéléphonie mobile (2) au noeud de réseau (50) prédéfini du réseau de radiotéléphonie mobile (2), et
le deuxième appareil radio (30) est réalisé pour produire une première instruction d'interrogation et pour fournir les données reçues par le noeud de réseau (50) prédéfini du premier appareil radio (20) en réponse à la première instruction d'interrogation dans le deuxième appareil radio (30) pour une utilisation ultérieure, et dans lequel
le premier appareil radio (20) présente un premier composant SIM (21) dans lequel l'adresse du noeud de réseau (50) prédéfini et l'identifiant unique du premier appareil radio (20) est stocké, un premier modem radio (26), auquel est associée une première interface série (25), et une première unité de commande (22), qui est réalisée pour exécuter un programme d'application stocké dans le premier dispositif de stockage (22) ou un dispositif de stockage (27) séparé pour la commande du premier appareil radio (20), et dans lequel
le deuxième appareil radio (30) présente un deuxième composant SIM (31) dans lequel l'identifiant unique du deuxième appareil radio (30) est stocké, un deuxième modem radio (36), auquel est associée une deuxième interface série (35), et une deuxième unité de commande (32), qui est réalisée pour exécuter un premier programme d'application stocké dans le deuxième dispositif de stockage (32) ou un dispositif de stockage (37) séparé pour la commande du deuxième appareil radio (30), dans lequel
la première unité de commande (22) est réalisée pour transmettre par exécution du premier programme d'application l'instruction d'envoi et les données stockées dans le premier dispositif de stockage (23) à envoyer par l'intermédiaire du réseau de radiotéléphonie mobile (2) par l'intermédiaire de la première interface série (25) au premier modem radio (26), dans lequel
le premier modem radio (26) est réalisé pour transmettre en réponse à l'instruction d'envoi les données obtenues à envoyer par l'intermédiaire du réseau de radiotéléphonie mobile (2) conjointement avec l'identifiant unique du premier appareil radio (20) et l'adresse du noeud de réseau (50) prédéfini par l'intermédiaire du réseau de radiotéléphonie mobile (2) au noeud de réseau (50) prédéfini, dans lequel
la deuxième unité de commande (32) est réalisée pour transmettre par exécution du deuxième programme d'application la première instruction d'interrogation par l'intermédiaire de la deuxième interface série (35) au deuxième modem radio (36) et pour interroger les données reçues par le noeud de réseau (50) prédéfini, envoyées par le premier appareil radio (20) par l'intermédiaire de la deuxième interface série (35) et pour les fournir pour une utilisation ultérieure dans le deuxième appareil radio (30), et dans lequel
la deuxième unité de commande (33) est réalisée pour transmettre par exécution du deuxième programme d'application une deuxième instruction d'interrogation par l'intermédiaire de la deuxième interface série (35) au deuxième modem radio (36), dans lequel l'adresse du noeud de réseau (50) prédéfini est stockée dans le deuxième composant SIM (31), dans lequel
le deuxième modem radio (36) est réalisé pour transmettre la deuxième instruction d'interrogation conjointement avec l'adresse du noeud de réseau (50) prédéfini et l'identifiant unique du deuxième appareil radio (30) par l'intermédiaire du réseau de radiotéléphonie mobile (2) au noeud de réseau (50) prédéfini, dans lequel l'adresse du premier appareil radio (20) et une information qu'une deuxième instruction d'interrogation envoyée par le deuxième appareil radio (30) est à transmettre au premier appareil radio (2) sont stockées dans le noeud de réseau (50) prédéfini, dans lequel
le noeud de réseau (50) prédéfini est réalisé pour transmettre une deuxième instruction d'interrogation reçue par le deuxième appareil radio (30) au premier appareil radio (20), dans lequel
le premier appareil radio (20) est réalisé pour transmettre en réponse à la deuxième instruction d'interrogation et par exécution du premier programme d'application l'instruction d'envoi et les données stockées dans le premier dispositif de stockage (22, 27) à envoyer par l'intermédiaire du réseau de radiotéléphonie mobile (2) au premier modem radio (26) et ensuite au noeud de réseau (50) prédéfini par l'intermédiaire de la première interface série (25), et dans lequel la deuxième instruction d'interrogation est une instruction d'interrogation AT.

5. Système de communication selon la revendication 4, **caractérisé en ce que**
le premier appareil radio (20) est réalisé pour produire l'instruction d'envoi à des moments pouvant être prédéfinis à plusieurs reprises ou en fonction d'un événement, et que
le deuxième appareil radio (30) est réalisé pour produire la première instruction d'interrogation à des moments pouvant être prédéfinis à plusieurs reprises ou en fonction d'un événement.

6. Système de communication selon l'une quelconque des revendications 4 ou 5,
**caractérisé en ce que**
le premier appareil radio (20) est réalisé en tant qu'appareil radio fixe ou mobile et le deuxième appareil radio (30) en tant qu'appareil radio fixe ou mobile.

7. Système de communication selon la revendication 6, **caractérisé en ce que**
le premier appareil radio (20) est réalisé en tant que capteur et le deuxième appareil radio (30) en tant qu'actionneur.

8. Système de communication selon l'une quelconque des revendications 4 à 7, **caractérisé par**
plusieurs deuxièmes appareils radio, dans lequel
le noeud de réseau (50) prédéfini est réalisé pour transmettre les données reçues par le premier appareil radio (20) aux deuxièmes appareils radio (30).

9. Système de communication selon l'une quelconque des revendications 4 à 8,
**caractérisé en ce que**
le noeud de réseau (50) prédéfini est réalisé en tant que station de base (BST), commande de station de base (BSC), centre de commutation mobile (MSC) ou en tant que centre de SMS.
